# EUROPEAN PATENT SPECIFICATION

(11) **EP 2 237 973 B1**
(45) Date of publication and mention of the grant of the patent: **15.06.2011**
(21) Application number: 07866248.3
(22) Date of filing: 21.12.2007
(51) Int. Cl.: B60C 9/00, B60C 15/06

(54) **TIRE HAVING A REINFORCED BEAD STRUCTURE**
REIFEN MIT EINER VERSTÄRKTEN WULSTSTRUKTUR
PNEUMATIQUE PRÉSENTANT UNE STRUCTURE DE TALON RENFORCÉE

(43) Date of publication of application: 13.10.2010
(73) Proprietor: Pirelli Tyre S.P.A., 20126 Milan (IT)
(72) Inventor: DAGHINI, Guido, Luigi, I-20126 Milano (IT); TRESOLDI, Stefano, I-20126 Milano (IT); BIZZI, Stefano, I-20126 Milano (IT)
(74) Representative: Giannesi, Pier Giovanni
(86) International application number: PCT/EP2007/011322
(87) International publication number: WO 2009/080077

(56) References cited:
- EP-A- 1 123 818
- EP-A- 1 457 596
- EP-A- 1 659 000
- EP-A- 1 800 901
- WO-A-00/20236
- US-A- 4 319 621
- US-A1- 2001 018 941

## Description

### Field of the invention

This invention relates to a tire having a reinforced bead structure.

More in particular, the present invention relates to a high performance tire such as, for example, a tire designed for high-powered cars or, more generally, a tire intended for applications involving high operating speeds and/or extreme driving conditions.

In more detail, the present invention relates to a high performance (HP) or ultra high performance (UHP) tire, as well as to a tire suitable for being employed in sporting contests such as track motor races.

Moreover, the present invention also relates to a tire suitable for Sports Utility Vehicles (SUV) which combine the characteristics of comfort and roominess typical of a station wagon with high performances (especially in terms of high torques and high speeds) typical of high-powered cars.

In still more detail, the present invention relates to a tire comprising a bead structure including at least one reinforcing layer, said reinforcing layer comprising at least one reinforcing cord comprising a core including at least one elongated element of composite material, said core being wrapped with at least one metal elongated element.

### Background of the invention

A tire for vehicle wheels generally comprises: a carcass structure including at least one carcass ply having respectively opposite ends which are turned up around or associated with respective annular anchoring structures, i.e. the so called "bead cores"; a tread band in a radial outer position with respect to the carcass structure; a belt (or breaker) structure interposed between the carcass structure and the tread band. A tire, generally further comprises a pair of sidewalls applied to the carcass structure in axially opposite positions.

The tire portion which comprises the bead core is known as "bead structure" and performs the function of fixing the tire on a respective rim.

Generally, in a radially outer position with respect to said bead core, the bead comprises a strip made of elastomeric composition, conventionally called "bead filler' or "bead apex", which has a substantially triangular cross-section and extends radially outward from the respective bead core.

Ways of improving the tire bead structure lifetime are already known in the art.

For examples, United States Patent US 4,319,621 relates to a pneumatic radial tire having an improved bead portion reinforcing construction comprising: a carcass body having substantially radially arranged ply cords; a belt for reinforcing a crown portion of said carcass body; and a bead portion reinforcing band disposed along a bead portion formed by folding the ply of said carcass body around a bead ring, said bead portion reinforcing band comprising at least one chipper layer, said chipper comprising an extensible reinforcing element embedded in rubber and formed of from 2 to 30 helically formed metal filaments without twisting; said reinforcing element having a modulus of elasticity of 0.029×10⁴ kg/mm² to 1.60×10⁴ kg/mm² and a compression modulus of elasticity of 20 to 300 kg/mm², each of said filaments having a diameter within a range of 0.1 to 1.0 mm; the ratio of maximum diameter to minimum diameter of said filaments in an outer contour projected on a plane perpendicular to the axial direction of one pitch of the filaments being within the range of 1 to 1.5; the ratio of an average diameter of an outer contour of each of said filaments projected on a plane perpendicular to the axial direction of one pitch of the filament to the filament diameter is within a range of 2 to 20; the rubber of said chipper having a 100% modulus of elasticity of 20 to 90 kg/cm²; and said reinforcing element being embedded in said rubber at ends of 10 to 50 elements/5 cm and inclined with respect to the ply cords of said carcass body to make said chipper as a whole extensible but otherwise rigid. Said chipper may be used as a chafer or as a flipper. The abovementioned tire is said to have an improved durability of the bead portion without damaging the rim chafing resistance of the metal chipper.

United States Patent Application US 2001/0018941 discloses the features of the preamble of claim 1 and relates to a tire, in particular a heavy-vehicle tire, of height H on its rim, comprising at least one radial carcass reinforcement, formed of at least one ply of inextensible reinforcement elements and anchored in each bead to a bead wire to form an upturn, the end of which is located at a radial distance H_{RNC} from the base D of the bead wire. Each bead is reinforced by at least two additional reinforcement armatures: a) at least one first armature which is formed of radial metallic reinforcement elements, and b) at least one second armature which is formed of metallic elements that form, with the circumferential direction, an angle α such that 0° ≤ α ≤ 45°. Viewed in meridian section, the first reinforcement armature is formed of at least one ply of inextensible elements which is wound around the anchoring bead wire of the carcass reinforcement on the inside of said carcass reinforcement to form two strands. The axially inner strand, which is located between the radially lower end A of its radially upper edge adjacent to the carcass reinforcement and its point of tangency T to the anchoring bead wire, follows a rectilinear trace AT, referred to as "shortest-path", and its radially upper end is radially located at a distance H_{LI} from the base D of the bead wire of between 0.216 and 0.432 times the height H. The axially outer strand, which is located axially to the inside of the upturn of the carcass reinforcement, has its radially upper end radially closer to the axis of rotation than the end of the carcass reinforcement upturn and the distance H_{LE} between said end of the base D of the bead wire is between 0.2 and 0.8 times the height H_{RNC} of the upturn of the carcass reinforcement. The second armature of elements is inclined relative to the radial direction, is not wound around the anchoring bead wire, and is arranged axially to the outside of the upturn of the carcass reinforcement. The metallic reinforcement elements of said first and second armatures are formed of radial metal cords or cables. The abovementioned tire is said to have an improved life of the beads.

United States Patent Application US 2003/0034108 relates to a tyre which comprises a crown reinforcement surmounted by a tread, said tread being joined by means of two sidewalls to two beads, between which extends at least one carcass reinforcement ply, anchored within each bead by winding around an annular element, the tensile strength of which is less than the tensile strength of a bead wire of a conventional tire of the same dimension, and an assembly of at least two bead reinforcement layers which are arranged in contact with the annular element and are composed of reinforcing elements which are parallel to each other within each layer and are crossed from one layer to the next, forming an angle α satisfying the relationship 0° ≤ α ≤ 15°. According to said document the annular element has a tensile strength of between 3 and 5 times the tension imparted to the carcass reinforcement by the recommended inflation pressure, and an elongation at break between 2 and 6%, all the bead reinforcement layers having a tensile strength of between 0.5 and 1 time the tensile strength of the annular element, and the total of the tensile strengths of the annular element and the assembly of the reinforcement layers being between 6 and 8 times the tension imparted to the carcass reinforcement. According to said document the bead reinforcement layers are formed of cables of aromatic polyamide. The abovementioned tire is said to have a better distribution of the tensile strengths of the elements which constitute the bead.

### Summary of the invention

The Applicant has perceived that, in high speed and in sports racing applications, there is the need for a tire which is able to withstand the relevant stresses - in particular lateral stresses - originating from high speed and/or extreme driving conditions, such as severe manoeuvres which are typically carried out in track races or rallies.

In particular, the Applicant has perceived the necessity for a tire which is provided with a reinforced bead structure suitable for ensuring the desired structural strength which is needed for the applications mentioned above without negatively affecting the handling of the tire itself.

Furthermore, the Applicant has noticed that any structural changes in the tire bead area, in order to decrease the tire rolling resistance by reducing stresses and strains in said area, generally increase the stiffness of the bead structure meanwhile causing the ride comfort characteristics to considerably decrease.

Therefore, the Applicant's efforts have been focused on modifying the tire bead area, in particular the reinforcing layer present in said bead area, in order to obtain the desired structural strength mentioned above in combination with a flexibility degree which ensures handling and ride comfort characteristics.

The Applicant has found that said results may be achieved by providing the tire bead area with a reinforcing layer comprising at least one reinforcing cord comprising a core including at least one elongated element of composite material, said core being wrapped with at least one metal elongated element. The Applicant has also found that said reinforcing layer reduce the tire weight, with a positive effect on the rolling characteristics of the same, particularly on its rolling resistance.

According to a first aspect, the present invention relates to a tire comprising:
- a pair of bead structures, said bead structure comprising at least one bead core;
- a carcass structure having a substantially toroidal shape, comprising at least one carcass ply extending between said bead structures and having end portions associated with said bead cores;
- at least one reinforcing layer laterally applied with respect to at least one end portion of said at least one carcass ply;
- a belt structure applied in a radially outer position with respect to said carcass structure;
- a tread band applied in a radially outer position with respect to said belt structure;
- a pair of sidewalls applied laterally on opposite sides with respect to said carcass structure;
wherein said at least one reinforcing layer comprises at least one first reinforcing cord comprising a core including at least one first elongated element comprising at least one composite material, said composite material including a plurality of elongated fibers embedded in a polymeric material, said core being wrapped with at least one second elongated element comprising at least one elementary metal wire.

Each one of said end portions of said at least one carcass ply has an axially outer portion and an axially inner portion.

According to one preferred embodiment, said at least one reinforcing layer is placed at an axially outer position with respect to the axially outer portion of said at least one end portion of said at least one carcass ply.

According to a further preferred embodiment, said at least one reinforcing layer is placed at an axially inner position with respect to the axially inner portion of said at least one end portion of said at least one carcass ply.

According to a further preferred embodiment, said at least one reinforcing layer is placed at an axially inner position with respect to the axially outer portion of said at least one end portion of said at least one carcass ply.

According to a further preferred embodiment, said tire comprises two carcass plies having end portions associated with said bead cores, said at least one reinforcing layer being placed between the end portions of said carcass plies.

According to a further preferred embodiment, said at least one reinforcing layer may start in correspondence of the radially outer portion of said at least one bead core, extends along the axially inner portion or the axially outer portion of said at least one end portion of said at least one carcass ply and extends radially outward with respect to said at least one bead core.

According to a further preferred embodiment, said bead structures further comprise at least one bead filler, said at least one bead filler being located radially outward with respect to said at least one bead core.

According to a further preferred embodiment, the end portions of said at least one carcass ply are turned up around said bead cores, said turned up carcass ply having an axially inner portion and an axially outer portion.

According to one preferred embodiment, said at least one reinforcing layer may start in correspondence of the radially inner portion of said at least one bead core, extends along the axially inner portion or the axially outer portion of said turned up carcass ply and ends substantially in correspondence of the end portion of said turned up carcass ply.

According to a further embodiment, said at least one reinforcing layer may extend along the tire sidewall up to the end of the tire belt structure.

The present invention may show one or more of the preferred characteristics hereinafter described.

According to one preferred embodiment, said at least one first reinforcing cord comprises a core including at least two first elongated elements, said at least two first elongated elements being arranged in parallel to each other.

According to a further preferred embodiment, said at least one first reinforcing cord comprises a core including at least three first elongated elements, said at least three first elongated elements being arranged in parallel to each other.

The presence of more than one first elongated element, greatly improved the stiffness of a reinforcing layer to be used in a tire bead area, in particular as a tire chafer of a high performance tire.

For the aim of the present description and of the claims which follow, the expression "elongated elements arranged in parallel to each other", means that said elongated elements are not twisted, i.e. have a substantially infinite lay length.

According to a further preferred embodiment, said core is wrapped with only one second elongated element, said second elongated element comprising at least one elementary metal wire.

The presence of only one second elongated element, allows to obtain a reinforcing cord having a breaking load in combination with a flexibility degree which ensure good structural strength as well as handling and ride comfort characteristics when used in a reinforcing layer of a tire bead area, in particular in a tire chafer of a high performance tire.

Preferably, in the case at least two or more second elongated elements are present, said second elongated elements are parallely wound, in the same direction, around said core. Preferably, the parallel winding intersection points between said second elongated elements which may negatively affect the lifetime of the reinforcing cord, are avoided.

According to one preferred embodiment, said at least one second elongated element consists of a single elementary metal wire (i.e. a monofilament).

According to one preferred embodiment, said first elongated element has a diameter of from about 0.1 mm to about 1.0 mm, preferably of from about 0.2 mm to about 0.6 mm.

According to one preferred embodiment, said second elongated element has a diameter of from about 0.08 mm to about 1.0 mm, preferably of from about 0.1 mm to about 0.6 mm.

According to one preferred embodiment, said first reinforcing cord has a diameter of from about 0.3 mm to about 2.0 mm, preferably of from about 0.4 mm to about 1.2 mm.

According to one preferred embodiment, said second elongated element is wound around said core at a stranding pitch of from about 2.5 mm to about 30 mm, preferably of from about 5 mm to about 20 mm.

According to one preferred embodiment said first reinforcing cord has an elongation at break, measured on the bare cord, higher than or equal to about 0.8%, preferably of from about 1.2% to about 2.5%.

Said elongation at break is measured according to method BISFA - 95 (method E6) (1995). Further details about said measurements will be given in the examples which follow.

According to one preferred embodiment, said first reinforcing cord has a stiffness, measured on the bare cord, higher than or equal to about 8 tsu, preferably of from about 12 tsu to about 25 tsu.

Said stiffness is measured according to method BISFA - 95 (method E8 - Determination of Taber Stiffness) (1995). Further details about said measurements will be given in the examples which follow.

According to one preferred embodiment, said composite material has a flexural modulus, measured according to Standard ASTM D790-03, at 23°C, not lower than or equal to about 10 GPa, preferably of from about 20 GPa to about 200 GPa.

Said flexural modulus allows to obtain a reinforcing cord having a stiffness particularly adapted to be used in a reinforcing layer of a tire bead area, in particular in a tire chafer of a high performance tire.

According to a further preferred embodiment, said composite material has an ultimate tensile strength, measured according to Standard ASTM D3916-02, at 23°C, not lower than or equal to about 600 MPa, preferably of from about 1000 MPa to about 2500 MPa.

Said ultimate tensile strength allows to obtain a reinforcing cord having a breaking load particularly adapted to be used in a reinforcing layer of a tire bead area, in particular in a tire chafer of a high performance tire.

According to a further preferred embodiment, said composite material has a tensile modulus, measured according to Standard ASTM D3916-02, at 23°C, not lower than or equal to about 20 GPa, preferably of from about 30 GPa to about 200 GPa.

According to a further preferred embodiment, said composite material has a specific gravity, measured according to Standard ASTM D792-00, lower than or equal to about 3.0 g/cm³, preferably of from about 1.0 g/cm³ to about 2.5 g/cm³.

According to a further preferred embodiment, said polymeric material has a flexural modulus, measured according to Standard ASTM D790-03, at 23°C, not lower than or equal to about 0.5 GPa, preferably of from aboput 2.0 GPa to about 25 GPa.

According to a further preferred embodiment, said polymeric material has an ultimate tensile strength, measured according to Standard ASTM D638-03, at 23°C, not lower than or equal to about 40 MPa, preferably of from about 50 MPa to about 200 MPa.

According to a further preferred embodiment, said polymeric material may be selected, for example, from thermoplastic resins, thermosetting resins, or mixtures thereof. Thermosetting resins are particularly preferred.

According to a further preferred embodiment, said thermoplastic resins may be selected, for example, from: polyamides (such as, for example, nylon-6,6, nylon-6, nylon-4,6), polyesters (such as, for example, polyethylene terephthalate, polyethylene naphthalate), polyether ether ketones, polycarbonates, polyacetals, or mixtures thereof. Polyethylene tetrephthalate is particularly preferred.

According to a further preferred embodiment, said thermosetting resins may be selected, for example, from: vinyl-ester resins, epoxy resins, unsaturated polyester resins (such as, for example, isophthalic polyester resins), phenolic resins, melamine resins, polyimide resins, bismaleimide resins, furan resins, silicone resins, allyl resins, or mixtures thereof. Vinyl ester resins, epoxy resins, or mixtures thereof, are particularly preferred.

According to one preferred embodiment, said elongated fibers have an ultimate tensile strength, measured according to Standard ASTM D885-03, not lower than or equal to about 1500 MPa, preferably of from about 1800 MPa to about 4000 MPa.

According to a further preferred embodiment, said elongated fibers have a tensile modulus, measured according to Standard ASTM D885-03, not lower than or equal to about 50 GPa, preferably of from about 60 GPa to about 250 GPa.

According to a further preferred embodiment, said elongated fibers may be selected, for example, from: glass fibers, aromatic polyamide fibers (for example, aramid fibers such as, for example, Kevlar^{®}), polyvinyl alcohol fibers, carbon fibers, or mixtures thereof. Glass fibers are particularly preferred. Glass fibers of type "E" are even particularly preferred.

According to one preferred embodiment, said elongated fibers are present in the composite material in an amount of from about 30% by weight to about 95% by weight, preferably of from about 50% by weight to about 90% by weight, with respect to the total weight of the composite material.

Advantageously, said composite material may be manufactured continuously by pultrusion. This is a known technique which comprises unwinding elongated fibers (i.e. fibers of unlimited length) from a reel, and dipping them into a polymeric material (i.e. a resin) bath to impregnate them. For example, when thermosetting resins are used, the fibers are passed through a liquid resin, or through a liquid mixture of its monomers and/or oligomers, and the thus impregnated fibers are passed through a die to give a desired shape to the composite material and to remove excessive uncured resin liquid and bubbles entrapped in the bundle. Then, the obtained composite material is passed through a tubular mold where it is heated to form a semi-cured composite material. Subsequently, the obtained semi-cured composite material is subjected to a further curing by means, for example, of UV radiation, or heating, to complete the curing reaction. When thermoplastic resins are used, the composite material may be produced according to the same manner as in the case of using the thermosetting resins, in which a bath of melted resins may be used as a liquid bath. Optionally, resin powder may be previously sprinkled around the fibers to promote the impregnation. Optionally, a further coating layer of thermoplastic resin, preferably selected from those above disclosed, may be applied to the obtained composite material. To this aim, the composite material is passed through a bath of melted resin and the thus impregnated composite material is passed through a die to obtain said coating layer.

As reported above, said composite material comprises a plurality, generally of the order of several hundreds, of elongated fibers (i.e. fibers of unlimited length) of a diameter of several microns, these elongated fibers all being side by side and, therefore, substantially parallel to each other, except for a few overlaps. Although it is in fact impossible to guarantee that the fibers will be arranged absolutely perfectly in parallel, the expression "substantially parallel to each other" is intended to indicate that said fibers are not intentionally twisted or braided and that said fibers are arranged parallel, except for the geometric accuracy of the arrangement.

Examples of composite materials which may be used according to the present invention and are available commercially, are the products known by the name of Glassline^{®} Getev from Tecniconsult S.p.A., Twintex^{®} from Saint-Gobain Vetrotex.

Optionally, in order to improve its adhesion to the elastomeric material, said first elongated element may be surface-treated by dipping it into a solution containing a mixture of resorcinol-formaldehyde resin and a rubber latex (this mixture being commonly denoted by the expression "resorcinol-formaldehyde latex RFL"), and subsequently drying them. The latex used may be selected, for example, from: vinylpyridine/styrene-butadiene (VP/SBR), styrene-butadiene (SBR), latex of natural rubber (NR), carboxylated and hydrogenated acrylonitrile-butadiene (X-HNBR), hydrogenated acrylonitrile (HNBR), acrylonitrile (NBR), ethylene-propylene-diene monomer (EPDM), chlorosulfonated polyethylene (CSM), or a mixture thereof.

Optionally, said first elongated element may be impregnated with an adhesive in a solvent medium for obtaining an additional layer covering the fibers. Preferably, the adhesive in a solvent medium is a blend of polymers, possibly halogenated polymers, organic compounds, such as isocyanates, and mineral fillers, such as carbon black. The additional layer, forming a ring around said elongated elements, is particularly advantageous for ensuring good adhesion to certain types of rubber, such as acrylonitrile (NBR), hydrogenated acrylonitrile (HNBR), carboxylated hydrogenated acrylonitrile (X-HNBR), vulcanizable hydrogenated acrylonitrile (ZSC), chlorosulfonated polyethylene (CSM), alkylated chlorosulfonated polyethylene (ACSM), ethylenepropylene-diene monomer (EPDM), or mixtures thereof.

According to one preferred embodiment, said at least one second elongated element comprises at least one preformed elementary metal wire. Preferably, said preformed elementary metal wire is preformed in one plane.

Preferably, said elementary metal wire is preformed so that it assumes a wave-shaped configuration so that it is substantially devoid of sharp edges and/or discontinuities in curvature along their longitudinal extension. Said feature is particularly advantageous since the absence of said sharp edges results in a favourable increasing of the breaking load of the elementary metal wire.

Particularly preferred is a preforming according to substantially sinusoidal undulations. Preferably, said sinusoidal undulations have a wavelength of from about 2.5 mm to about 30 mm, and more preferably of from about 5 mm to about 25 mm. Preferably, said sinusoidal undulations have a wave amplitude of from about 0.12 mm to about 1 mm.

In an alternative embodiment, the elementary metal wire is not preformed in a plane but, for example, is helically preformed.

In order to obtain said preformed elementary metal wire, it is possible to use any one of the methods known in the art. For example, it is possible to use toothed-wheel devices of the type illustrated in United States Patent US 5,581,990, or to use the device described in International Patent Application WO 00/39385.

According to one preferred embodiment, said second elongated element is made of steel or an alloy thereof. Usually, the breaking strength of a standard NT (normal tensile) steel ranges from 2600 N/mm² (or 2600 MPa) to 3200 N/mm², the breaking strength of a HT (High Tensile) steel ranges from 3000 N/mm² to 3600 N/mm², the breaking strength of a SHT (Super High Tensile) steel ranges from 3300 N/mm² to 3900 N/mm², the breaking strength of a UHT (Ultra High Tensile) steel ranges from 3600 N/mm² to about 4200 N/mm². Said breaking strength values depend in particular on the quantity of carbon contained in the steel.

Optionally, said at least one first reinforcing cord may be surface coated with a metal or a metal alloy (e.g., copper, zinc, copper/zinc alloy, zinc/manganese alloy, zinc/molibdenum/cobalt alloys, and the like) by a plasma deposition technique which may be selected from the group comprising: sputtering (in particular, magnetron sputtering), evaporation by voltaic arc, plasma spray, plasma enhanced chemical vapor deposition (PECVD). Details about said plasma deposition technique may be found, for example, in International Patent Applications WO 2004/057053, WO 2005/095668, WO 2005/095078, or WO 2006/002673.

According to a further embodiment, said at least one reinforcing layer comprises: (a) at least one first reinforcing cord comprising a core including at least one first elongated element comprising at least one composite material, said composite material including a plurality of elongated fibers embedded in a polymeric material, said core being wrapped with at least one second elongated element comprising at least one elementary metal wire; and (b) at least one second reinforcing cord made of metal, preferably of steel.

According to a further embodiment, said at least one reinforcing layer comprises: (a) at least one first reinforcing cord comprising a core including at least one first elongated element comprising at least one composite material, said composite material including a plurality of elongated fibers embedded in a polymeric material, said core being wrapped with at least one second elongated element comprising at least one elementary metal wire; and (c) at least one reinforcing elongated element made of a composite material, said composite material including a plurality of elongated fibers embedded in a polymeric material (i.e. a monofilament of composite material). Said composite material, said polymeric material and said elongated fibers have the same characteristics above disclosed.

Said reinforcing cords are usually embedded in an elastomeric composition according to well known techniques. Usually, said elastomeric composition comprises elastomeric polymers, as well as other additives such as, for example, fillers (e.g., carbon black, silica), vulcanizing agents (e.g., sulfur), activators, accelerators, plasticizing, used in the tire industry. Examples of elastomeric polymers that may be advantageously used are: natural rubber (NR), epoxidized natural rubber (ENR); homopolymers and copolymers of butadiene, of isoprene or of 2-chlorobutadiene, such as, for example, polybutadiene (BR), polyisoprene (IR), styrene-butadiene (SBR), nitrile-butadiene (NBR), polychloroprene (CR); butyl rubbers (IIR), halogenated butyl rubbers (XIIR); ethylene/propylene copolymers (EPM); ethylene/propylene/nonconjugated diene (such as, for example, norbornene, cyclooctadiene or dicyclopentadiene) terpolymers (EPDM); or mixtures thereof. A person skilled in the art will be capable of determining which elastomeric polymers as well as which additives to use depending on the characteristics of the final manufactured product that it is desired to obtain.

Preferably, the reinforcing layer (i.e. the chafer) according to the present invention is employed in tires which are suitable for "HP" (High Performance) or "UHP" (Ultra High Performance) tires, i.e. tires capable of sustaining a maximum speed of at least 210 Km/h, preferably over 240 Km/h, even more preferably over 270 Km/h. Example of said tires are those belonging to Classes "H", "V", "W","Y", "Z", or "ZR".

Moreover, the tire according to the present invention is suitable for Sports Utility Vehicles (SUV) which combines the characteristics of comfort and roominess of a station wagon with high performances (especially in terms of high speeds) typical of high-powered cars.

### Brief description of the drawings

The features and advantages of the present invention will be made apparent by the following detailed description of some exemplary embodiments thereof, provided merely by way of non-limitative examples, description that will refer to the attached drawings, wherein:
- Fig. 1 shows a cross sectional view of a tire according to an embodiment of the present invention;
- Fig. 2-5 show cross sectional views of tires according to further embodiments of the present invention;
- Fig. 6 shows a perspective view of a reinforcing cord which may be advantageously used according to the present invention.

### Detailed description of the preferred embodiments

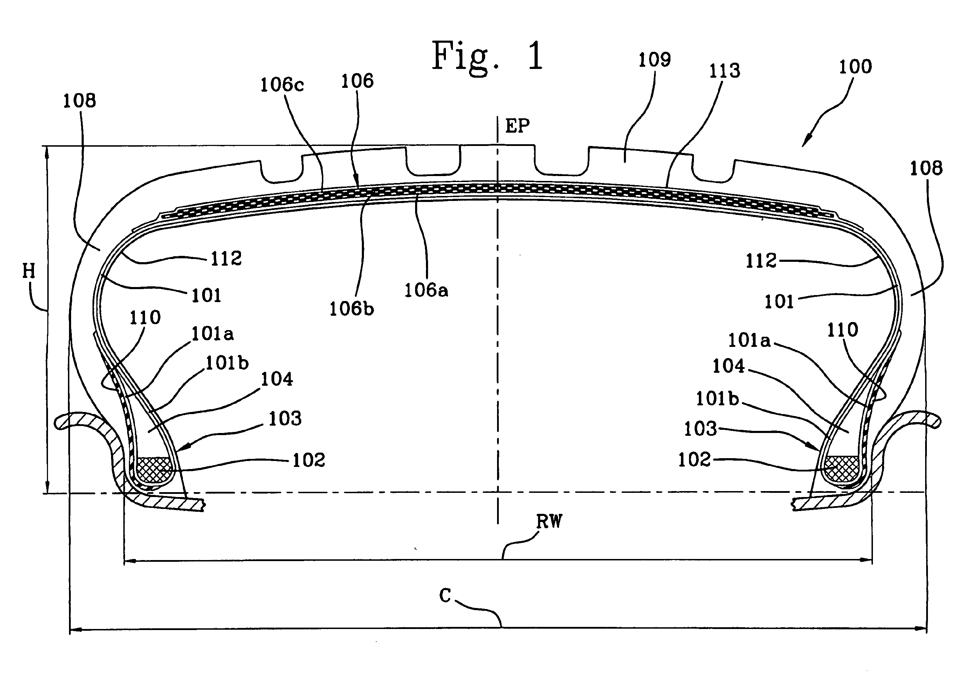

With respect to Fig. 1 the following definitions are given:
- "equatorial plane" (EP) is the plane perpendicular to the tire rotational axis and containing the axial centerline of the tire;
- "aspect ratio" is the ratio of the tire cross-section height (H), i.e. the radial distance from the nominal rim diameter (RW) to the outer diameter of the tire at its equatorial plane, divided by the tire cross-section width (C), i.e. the maximum linear distance parallel to the tire rotation axis between the outer surfaces of the sidewalls [the above dimensions are determined according to the ETRTO Standard (2006), pg. 4-5].

The tire (100) comprises at least one carcass ply (101), extending between said bead structures (103) comprising at least one bead core (102) and at least one bead filler (104), said carcass ply (101) having end portions associated with said bead core (102). Said bead structure (103) allows the the tire to engage on a rim forming part of a vehicle wheel.

In the particolar embodiment of Fig. 1, the association between the carcass ply (101) and the bead core (102) is achieved by turning up the end portions of the carcass ply (101) around the bead core (102) so as to form the turned up carcass ply, said turned up carcass ply having an axially outer portion (101a) and an axially inner portion (101 b).

Alternatively, the conventional bead core (102) may be replaced with at least one annular insert formed from rubberized wires arranged in concentric coils (not represented in Fig. 1) (see, for example, European Patent Applications EP 928,680 or EP 928,702). In this case, the carcass ply (101) is not turned up around said annular inserts, the coupling being provided by a second carcass ply (not represented in Fig. 1) applied externally over the first.

The carcass ply (101) generally comprises a plurality of reinforcing cords arranged parallel to each other and at least partially coated with a layer of a crosslinked elastomeric composition. These reinforcing cords are usually made of textile fibres, for example rayon, nylon or polyethylene terephthalate, or of steel wires stranded together, coated with a metal alloy (for example copper/zinc, zinc/manganese, zinc/molybdenum/cobalt alloys, and the like).

The carcass ply (101) is usually of radial type, i.e. it incorporates reinforcing cords arranged in a substantially perpendicular direction relative to a circumferential direction.

A belt structure (106) is applied in a radially outer position with respect to said carcass ply (101). In the particular embodiment of Fig. 1, the belt structure (106) comprises two belt layers (106a, 106b) which incorporate a plurality of reinforcing cords, typically metal cords, which are parallel to each other in each layer and intersecting with respect to the adjacent layer, oriented so as to form a predetermined angle relative to a circumferential direction. On the radially outermost belt layer (106b), at least one zero-degree reinforcing layer (106c) may optionally be applied, commonly known as a "0° belt", which generally incorporates a plurality of reinforcing cords, typically textile cords, arranged at an angle of a few degrees relative to a circumferential direction, usually coated with a crosslinked elastomeric composition.

A tread band (109) is applied in a radially outer position with respect to said belt structure (106). Sidewalls (108) are also applied externally onto the carcass ply (101), this sidewall extending, in an axially external position, from the respective bead structure (103) to the edge of the tread band (109).

In the particular embodiment of Fig. 1, a reinforcing layer (110), hereinafter referred to as "chafer", which is made according to the present invention, is placed in an axially outer position with respect to the axially outer portion (101a) of the turned up carcass ply.

More in particular, the chafer (110) comprises a plurality of first reinforcing cords comprising a core including at least one first elongated element comprising at least one composite material, said composite material including a plurality of fibers embedded in a polymeric material, said core being wrapped with at least one second elongated element comprising at least one elementary metal wire. Preferably, said first elongated element is made of a plurality of elongated glass fibers embedded in a vinyl ester resin. Preferably, said second elongated element is made of a single elementary steel wire (i.e. a monofilament).

Preferably, said steel wire is provided with a coating of corrosion resistant alloy, e.g., a brass coating, usually having a thickness of from 0.10 µm to 0.30 µm. Said coating ensures better adhesion of the reinforcing cords to the rubberizing compound and provides for protection against corrosion of the metal, both during production of the tire and during use thereof.

Said reinforcing cords are usually embedded in an elastomeric composition according to well known techniques.

Preferably, the end counts of the reinforcing cords in the chafer (110) according to the present invention is of from about 40 cords/dm to about 160 cords/dm, more preferably of from about 80 cords/dm to about 130 cords/dm.

Preferably, the reinforcing cords of the chafer (110) according to the present invention are obliquely oriented with respect to a radial plane of the tire (i.e. a plane containing the rotational axis of the tire).

Preferably, said reinforcing cords are disposed at an angle relative to a radial plane of the tire in the range of from about 10° to about 70°, more preferably of from about 15° to about 45°.

The Applicant has noticed that the closest is the angle of the reinforcing cords of the chafer (110) to the angle of the reinforcing cords of the carcass ply (101), the greatest is the stiffness which can be conferred to the chafer (110), but the lowest is the transmission to the tire of the torque provided by the engine. Therefore, the angle of the reinforcing cords of the chafer (110) has to be selected by taking into account the necessity of achieving a compromise between said two different technical aspects. Preferably, the thickness of the chafer (110) - i.e. the total thickness including the diameter of the reinforcing cords and the elastomeric composition into which the reinforcing cords are embedded - is in the range of from about 0.5 mm to about 1.7 mm, more preferably of from about 0.8 mm to about 1.1 mm.

In the particular embodiment of Fig. 1, the chafer (110) starts in correspondence of the radially inner portion of the bead core (102), extends along the axially outer portion (101a) of said turned up carcass ply and directly contacts the same, and ends substantially in correspondence of the end portion of said turned up carcass ply.

Alternatively, the chafer (110) may extend along the tire sidewall (108), up to the ends of the tire belt structure (106).

Alternatively, the chafer (110) may comprise: (a) at least one first reinforcing cord comprising a core including at least one first elongated element comprising at least one composite material, said composite material including a plurality of fibers embedded in a polymeric material, said core being wrapped with at least one second elongated element comprising at least one elementary metal wire; and (b) at least one second reinforcing cord made of metal, preferably of steel. Said reinforcing cords may be disposed in an alternated sequence such as: one first reinforcing cord (a), one second reinforcing cord (b), i.e. 1:1 sequence. Alternatively, said alternated sequence may be the following: two first reinforcing cord (a), one second reinforcing cord (b), i.e 2:1 sequence.

Alternatively, the chafer (110) may comprise: (a) at least one first reinforcing cord comprising a core including at least one first elongated element comprising at least one composite material, said composite material including a plurality of fibers embedded in a polymeric material, said core being wrapped with at least one second elongated element comprising at least one elementary metal wire; and (c) at least one reinforcing elongated element made of a composite material, said composite material including a plurality of elongated fibers embedded in a polymeric material (i.e. a monofilament of composite material). Said reinforcing cords and said reinforcing elements may be disposed in an alternated sequence such as: one first reinforcing cord (a), one monofilament of composite material (c), i.e 1:1 sequence. Alternatively, said alternated sequence may be the following: two first reinforcing cord (a), one monofilament of composite material (c), i.e 2:1 sequence.

A tread underlayer (113) may be placed between said belt structure (106) and said tread band (109). In the particular embodiment of Fig. 1, said tread underlayer (113) has uniform thickness. Alternatively, said tread underlayer (113) may have a variable thickness in the transversal direction. For example, the thickness may be greater near its outer edges than at a central zone.

Said tread underlayer (113) usually extends over a surface substantially corresponding to the surface of development of said belt structure (106). Alternatively, said tread underlayer (113) extends only along at least one portion of the development of said belt structure (106), for instance at opposite side portions of said belt structure (106) (not represented in Fig. 1).

A strip made of elastomeric material, commonly known as a "mini-sidewall", may optionally be present in the connecting zone between the sidewalls (108) and the tread band (109) (not represented in Fig. 1), this mini-sidewall generally being obtained by co-extrusion with the tread band and allowing an improvement in the mechanical interaction between the tread band (109) and the sidewalls (108). Alternatively, the end portion of the sidewall (108) directly covers the lateral edge of the tread band (109).

Alternatively, a stiffness of the tire sidewall (108) may be improved by providing the tire bead structure (103) with a further reinforcing layer generally known as "flipper" (not represented in Fig. 1).

The flipper is a reinforcing layer which is wound around the respective bead core (102) and bead filler (103) so as to at least partially envelope them, said reinforcing layer being arranged between the carcass ply (101) and the bead structure (103). Usually the flipper is in contact with said carcass ply (101) and bead structure (103).

The flipper usually comprises a plurality of elongated reinforcing elements that are embedded in a crosslinked elastomeric composition, said reinforcing elements being made of textile materials (e.g., aramide, or rayon), or of metallic materials (e.g., steel cord).

In the case of tubeless tires, a rubber layer (112) generally known as a liner, which provides the necessary impermeability to the inflation air of the tire, may also be provided at a radially inner position with respect to the carcass ply (101).

The process for producing the tire according to the present invention may be carried out according to techniques and using apparatus that are known in the art, said process including manufacturing the green tire, and subsequently moulding and vulcanizing the green tire.

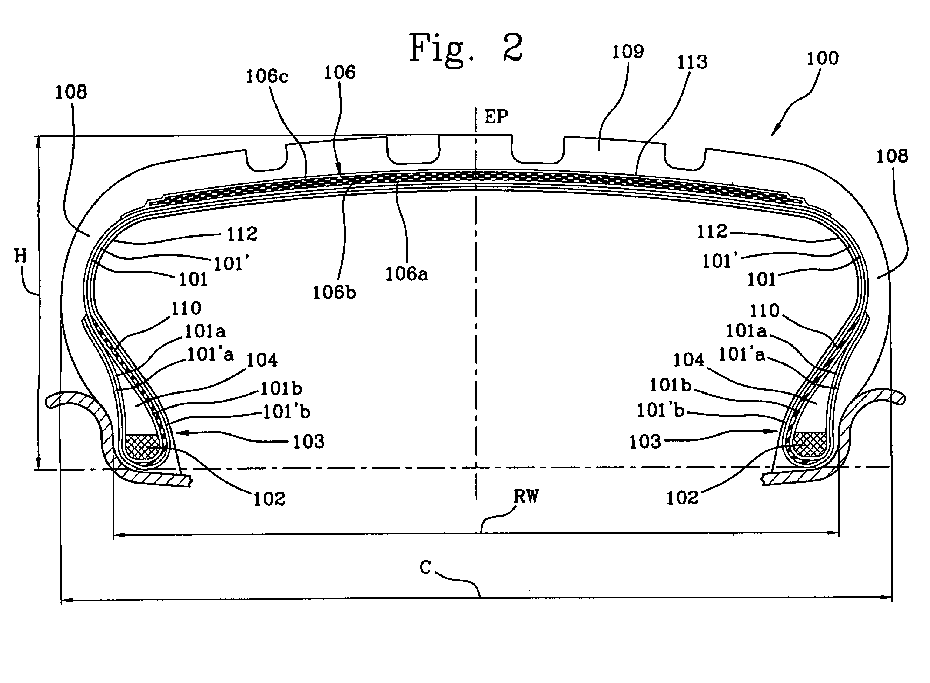

Fig. 2 shows a further embodiment of a tire according to the present invention.

In particular, Fig. 2 shows a tire (100) having the same structure as well as the same characteristics described in Fig. 1, said tire (100) further comprising a second carcass ply (101'), applied externally over the first carcass ply (101), the end portions of which are associated with respective bead structures (103) comprising at least one bead core (102) and at least one bead filler (104). The association between the carcass ply (101') and the bead core (102) is achieved here by turning up the end portions of the carcass ply (101') around the bead core (102) so as to form the turned up carcass ply, said turned up carcass ply having an axially outer portion (101'a) and an axially inner portion (101b') as shown in Fig. 1.

In the particular embodiment of Fig. 2, said chafer (110) is placed at an axially inner position between the axially inner portion (1 01 b) of the turned up carcass ply and the axially inner portion (101'b) of the turned up carcass ply.

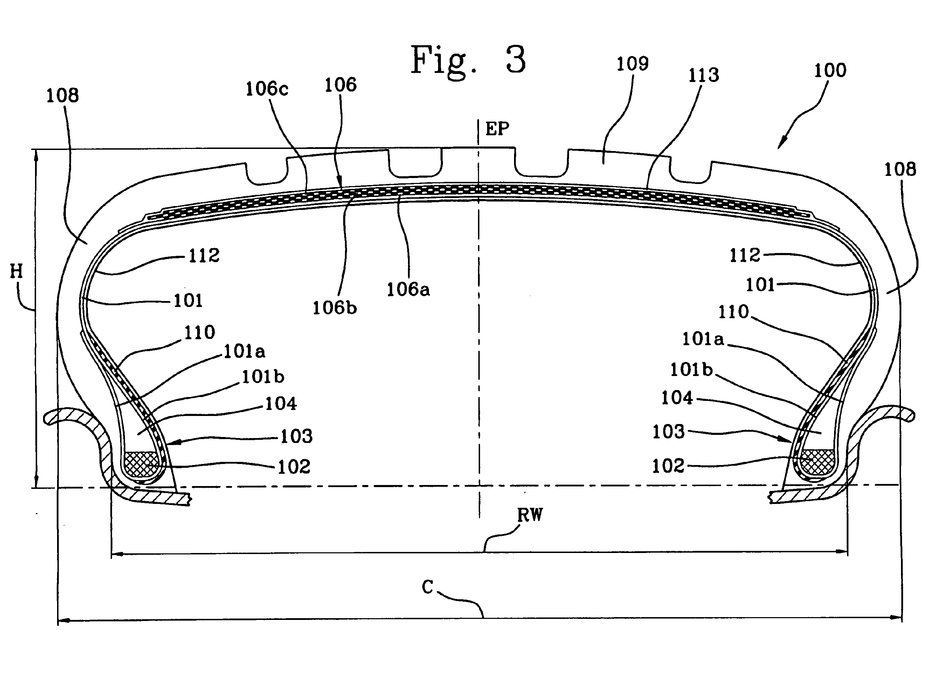

Fig. 3 shows a further embodiment of a tire according to the present invention.

In particular, Fig. 3 shows a tire (100) having the same structure as well as the same characteristics described in Fig. 1, wherein said chafer (110) is placed at an axially inner position with respect to the axially inner portion (101b) of said turned up carcass ply.

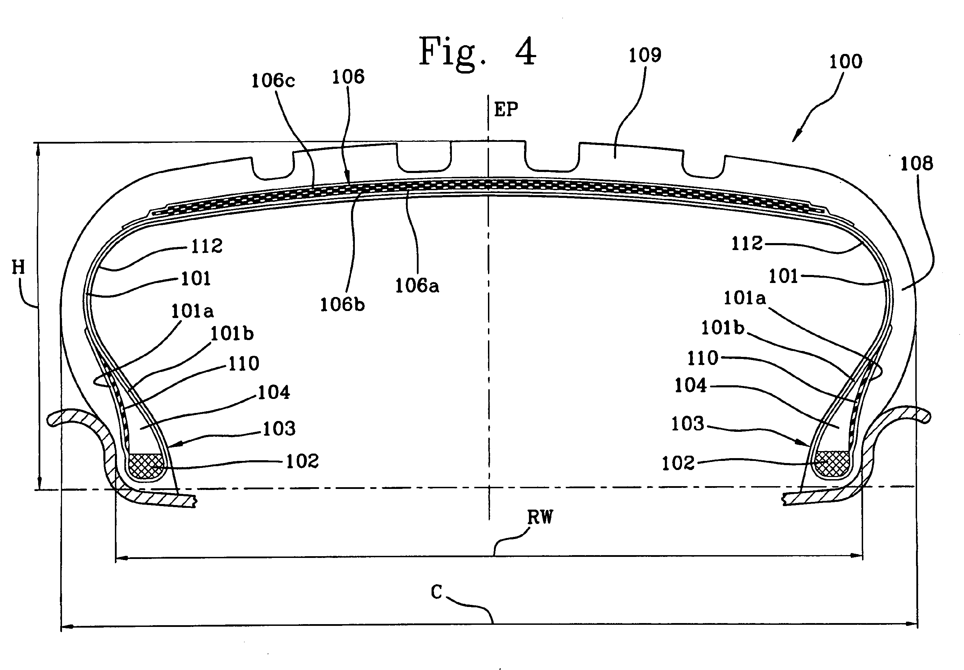

Fig. 4 shows a further embodiment of a tire according to the present invention.

In particular, Fig. 4 shows a tire (100) having the same structure as well as the same characteristics described in Fig. 1, wherein said chafer (110) is placed at an axially inner position with respect to the axially outer portion (101 a) of said turned up carcass ply.

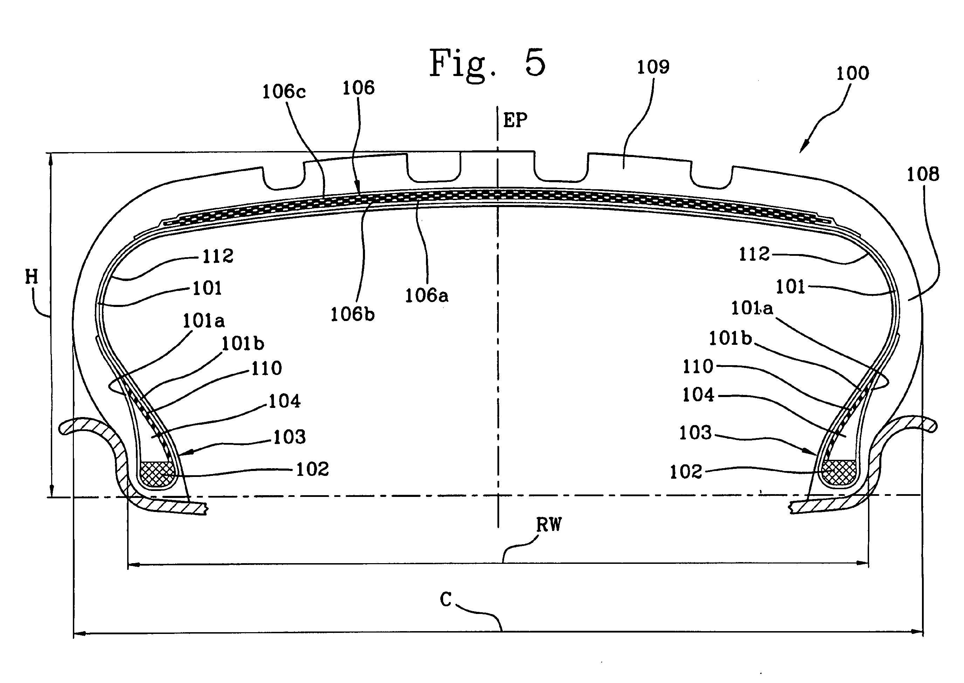

In the particular embodiment of Fig. 4, said chafer (110) starts in correspondence of the radially outer portion of said bed core (102), extends along the axially outer portion (101a) of said turned up carcass ply and directly contacts the same, and ends substantially in correspondence of the end portion of said at least one bead filler (104). Fig. 5 shows a further embodiment of a tire according to the present invention.

In particular, Fig. 5 a tire (100) having the same structure as well as the same characteristics described in Fig. 1, wherein said chafer (110) is placed at an axially outer position with respect to the axially inner portion (101 b) of said turned up carcass ply.

In the particular embodiment of Fig. 4, said chafer (110) starts in correspondence of the radially outer portion of said bed core (102), extends along the axially inner portion (101b) of said turned up carcass ply and directly contacts the same, and ends substantially in correspondence of the end portion of said at least one bead filler (104).

Preferably, the tire according to the present invention, i.e. the tire (100) represented in Fig. 1-5, has an aspect ratio (H/C), lower than or equal to about 0.65, preferably lower than or equal to about 0.45, even more preferably lower than or equal to about 0.35. Low aspect ratio values are advantageously used in "HP" or "UHP" tires.

Moreover, the tire according to the present invention is suitable for Sports Utility Vehicles (SUV) which combines the characteristics of comfort and roominess of a station wagon with high performances (especially in terms of high speeds) typical of high-powered cars.

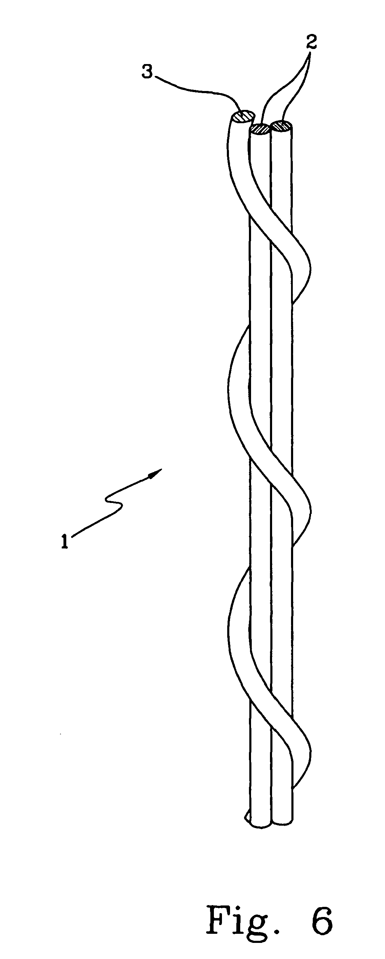

Fig. 6 shows a perspective view of a first reinforcing cord which is particularly useful for the aim of the present invention. The reinforcing cord (1) comprises a core made of two first elongated elements (2) arranged in parallel, said core being wrapped with one second elongated element (3). Preferably, each one of said two first elongated elements is made of a plurality of elongated glass fibers embedded in a vinyl ester resin. Preferably, said second elongated element is made of a single elementary steel wire (i.e. a monofilament).

### EXAMPLES 1-4

Four different reinforcing cords having the following characteristics were tested:
Example 1 (comparative): 2+1×0.22 HT Inf. / 12.5 mm S reinforcing steel cord (usually used in a tire chafer, in particular in a tire chafer for HP or UHP tires);
Example 2 (comparative): 2+1×0.28 Inf. / 16 mm S reinforcing steel cord (usually used in a tire chafer, in particular in a tire chafer for HP or UHP tires);
Example 3 (invention): 2×0.25VT+1×0.22 HT Inf. / 14 mm S reinforcing cord according to the present invention having a core made of two elongated elements, arranged in parallel, made of Glassline^{®} Getev 025/101 which is a composite material made of elongated glass fibers of type "E" (80% by weight) embedded in a vinyl ester resin (20% by weight) (commercialized by Tecniconsult S.p.A.) having the following characteristics:
   - flexural modulus, measured according to Standard D790-03, at 23°C, of 48 GPa;
   - ultimate tensile, strength measured according to Standard ASTM D3916-02, at 23°C, of 1450 MPa;
   - tensile modulus, measured according to Standard ASTM D3916-02, at 23°C, of 50 GPa;
   - specific gravity, measured according to Standard ASTM D792-00, of 2.1 g/cm³; said core being wrapped with one elementary steel wire at a stranding pitch of 14 mm S;
Example 4 (invention): 2×0.30VT+1×0.28 Inf. /16 mm, S reinforcing cord according to the present invention having a core made of two elongated elements, arranged in parallel, made of Glassline^{®} Getev 030/101 which is a composite material made of vinyl ester resin (20% by weight), glass fibers of type "E" (80% by weight) (commercialized by Tecniconsult S.p.A.) having the following characteristics:
   - flexural modulus, measured according to Standard D790-03, at 23°C, of 48 GPa;
   - ultimate tensile, strength measured according to Standard ASTM D3916-02, at 23°C, of 1450 MPa;
   - tensile modulus, measured according to Standard ASTM D3916-02, at 23°C, of 50 GPa;
   - specific gravity, measured according to Standard ASTM D792-00, of 2.1 g/cm³; said core being wrapped with one elementary steel wire at a stranding pitch of 16 mm S.

**TABLE 1**

| EXAMPLE | CORD DIAMETER⁽¹⁾ (mm) | BREAKING LOAD⁽²⁾ (N) | TABER STIFFNESS⁽¹⁾ (tsu) | ELONGATION AT BREAK⁽⁴⁾ (%) | WEIGHT⁽⁵⁾ (Ktex) |
|---|---|---|---|---|---|
| 1 (*) | 0.45 | 370 | 13.6 | 1.67 | 0.88 |
| 2 (*) | 0.64 | 540 | 34.3 | 1.83 | 1.47 |
| 3 | 0.51 | 209 | 12.2 | 1.99 | 0.48 |
| 4 | 0.68 | 280 | 29.7 | 1.73 | 0.78 |

| | | | | | |
|---|---|---|---|---|---|
| (*): comparative; ⁽¹⁾: measured according to method BISFA E10; ⁽²⁾: measured according to method BISFA E6; ⁽³⁾: measured according to method BISFA E8; ⁽⁴⁾: measured according to method BISFA E6. ⁽⁵⁾: measured according to method BISFA E5. | | | | | |

The data reported in Table 1, clearly show that the reinforcing cords, having approximatively the same diameter, according to the present invention (Examples 3 and 4) have a lower weight with respect to the steel reinforcing cords according to comparative examples (Examples 1 and 2 - i.e. reinforcing cords usually used in a tire chafer, in particular in a tire chafer for HP or UHP tires) as the remaining properties are not negatively influenced. In particular, taber stiffness and elongation at break remain substantially unchanged, while a sufficient breaking load is achieved.

Moreover, the above reported reinforcing cords were subjected to buckling resistance test which was measured by means of a pure momentum dynamometer, operating as reported by Simoni F. and Canevari C., in: "Compression and Flexion Measurements on Textile, Glass and Steel Cords" (1974), Paper No. 60, presented to "The Rubber Division of the American Chemical Society", Toronto, Ontario, Canada.

To this aim, a cord sample of Example 2 (comparative - i.e. reinforcing cord usually used in a tire chafer, in particular in a tire chafer for HP or UHP tires) and a cord sample of Example 4 (according to the present invention), each of said cord samples being previously rubberized by means of a laboratory extruder, was positioned onto a crosslinkable elastomeric material having a modulus at 100% elongation (100% Modulus) of 2.06±0.2 (said modulus being measured according to Standard ISO 37:2005), which was coupled with a steel tape. The cord sample ends and the steel tape ends were clamped and the so obtained test sample was vulcanized in a mould under predetermined vulcanizing conditions so as to obtain a single block.

After the vulcanization, one end of the obtained single block is fixed onto the pure momentum dynamometer in such a way as to prevent its rotation only and not its planar movement while the other end is fixed so as to prevent its planar movement only and not its rotation, i.e. said single block was subjected to a pure bending momentum.

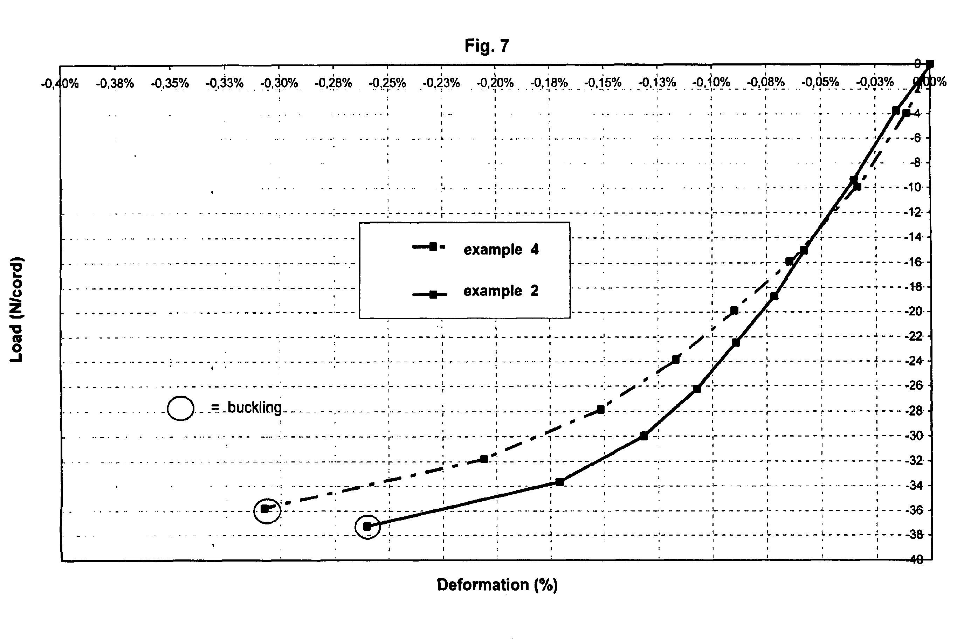

The obtained results were given in the enclosed Fig. 7 wherein in abscissa was indicated the deformation [in percentage (%)] which is given to each cord sample and in ordinates was indicated the load (N/cord) which is obtained from said deformation. Said results clearly show that any significative difference between the two cord sample occurs. As a matter of fact, the buckling occurs when a load of -36 N/cord was obtained in the case of the cord sample of Example 4 (according to the present invention) and of -37.5 N/cord in the case of the cord sample of Example 2 (comparative).

### EXAMPLES 5-6

Two rubberized reinforcing layers were produced by using the following cords:
- cord A:: cord of Example 2 (comparative);
- cord B:: cord of Example 4 (according to the present invention).

In more detail, the following two rubberized reinforcing layers were obtained:
(1) a rubberized reinforcing layer (comparative layer 1) wherein the 100% of the cords embedded in the elastomeric material were the cords A; the end counts of the cords was 85 cords/dm; the thickness of the layer was 1.15 mm;
(2) rubberized reinforcing layer (invention layer 2) wherein the 100% of the cords embedded in the elastomeric material were the cords B; the end counts of the cords was 85 cords/dm; the thickness of the layer was 1.15 mm.

Samples of the above mentioned rubberized reinforcing layer having length of 500 mm and width of 100 mm, were weighted and the following total weight (g/m²) were found:
(1) comparative layer 1: 2410 g/m²;
(2) invention layer 2: 1825 g/m² (weight reduction of about 25% with respect to comparative layer 1.

The data above reported, clearly show that the reinforcing cords according to the present invention, notwithstanding the remarkable weight reduction with respect to the steel reinforcing cords according to comparative examples, i.e. reinforcing cords usually used in a tire chafer, in particular in a tire chafer for HP or UHP tires, maintain substantially unchanged properties, in particular taber stiffness and elongation at break, while a sufficient breaking load is achieved.

## Claims

1. Tire comprising:
- a pair of bead structures (103), said bead structure (103) comprising at least one bead core (102);
- a carcass structure having a substantially toroidal shape, comprising at least one carcass ply (101) extending between said bead structures (103) and having end portions associated with said bead cores (102);
- at least one reinforcing layer (110) laterally applied with respect to at least one end portion of said at least one carcass ply (101);
- a belt structure (106) applied in a radially outer position with respect to said carcass structure;
- a tread band (109) applied in a radially outer position with respect to said belt structure (106);
- a pair of sidewalls (108) applied laterally on opposite sides with respect to said carcass structure;
wherein said at least one reinforcing layer (110) comprises at least one first reinforcing cord (1) comprising a core (2) including at least one first elongated element comprising at least one composite material, **characterised in that** said composite material including a plurality of elongated fibers embedded in a polymeric material, said core (2) being wrapped with at least one second elongated element (3) comprising at least one elementary metal wire.

2. Tire according to claim 1, wherein said at least one reinforcing layer (110) is placed at an axially outer position with respect to the axially outer portion (101a) of said at least one end portion of said at least one carcass ply (101).

3. Tire according to claim 1, wherein said at least one reinforcing layer (110) is placed at an axially inner position with respect to the axially inner portion (101b) of said at least one end portion of said at least one carcass ply (101).

4. Tire according to claim 1, wherein said at least one reinforcing layer (110) is placed at an axially inner position with respect to the axially outer portion (101a) of said at least one end portion of said at least one carcass ply (101).

5. Tire according to claim 1, wherein said tire comprises two carcass plies (101,101') having end portions associated with said bead cores (102), said at least one reinforcing layer (110) being placed between the end portions of said carcass plies (101,101').

6. Tire according to any one of the preceding claims, wherein said at least one reinforcing layer (110) starts in correspondence of the radially outer portion of said at least one bead core (102), extends along the axially inner portion (101b) or the axially outer portion (101a) of said at least one end portion of said at least one carcass ply (101) and extends radially outward with respect to said at least one bead core (102).

7. Tire according to any one of the preceding claims wherein said at least one reinforcing layer (110) extends along the tire sidewall (108) up to the end of the tire belt structure (106).

8. Tire according to any one of the preceding claims, wherein said at least one first reinforcing cord (1) comprises a core (2) including at least two first elongated elements arranged in parallel to each other.

9. Tire according to claim 8, wherein said at least one reinforcing cord (1) comprises a core (2) including at least three elongated elements arranged in parallel to each other.

10. Tire according to any one of the preceding claims, wherein said core (2) is wrapped with only one second elongated element (3), said second elongated element (3) comprising at least one elementary metal wire.

11. Tire according to any one of the preceding claims, wherein said core (2) is wrapped with at least two or more second elongated elements (3), each one of said second elongated elements (3) comprising at least one elementary metal wire.

12. Tire according to claim 11, wherein said second elongated elements (3) are parallely wound, in the same direction, around said core (2).

13. Tire according to any one of the preceding claims, wherein said at least one second elongated element (3) consists of a single elementary metal wire.

14. Tire according to any one of the preceding claims, wherein said first elongated element has a diameter of from about 0.1 mm to about 1.0 mm:

15. Tire according to any one of the preceding claims, wherein said second elongated element has a diameter of from about 0.08 mm to about 1.0 mm.

16. Tire according to any one of the preceding claims, wherein said reinforcing cord (1) has a diameter of from about 0.3 mm to about 2.0 mm.

17. Tire according to any one of the preceding claims, wherein said second elongated element (3) is wound around said core (2) at a stranding pitch of from about 2.5 mm to about 30 mm.

18. Tire according to any one of the preceding claims, wherein said reinforcing cord (1) has an elongation at break, measured on the bare cord, higher than or equal to about 0.8%.

19. Tire according to any one of the preceding claims, wherein said reinforcing cord (1) has a stiffness, measured on the bare cord, higher than or equal to about 8 tsu.

20. Tire according to any one of the preceding claims, wherein said composite material has a flexural modulus, measured according to Standard ASTM D790-03, at 23°C, not lower than or equal to about 10 GPa.

21. Tire according to any one of the preceding claims, wherein said composite material has an ultimate tensile strength, measured according to Standard ASTM D3916-02, at 23°C, not lower than or equal to about 600 MPa.

22. Tire according to any one of the preceding claims, wherein said composite material has a tensile modulus, measured according to Standard ASTM D3916-02, at 23°C, not lower than or equal to about 20 GPa.

23. Tire according to any one of the preceding claims, wherein said composite material has a specific gravity, measured according to Standard ASTM D792-00, lower than or equal to about 3.0 g/cm³.

24. Tire according to any one of the preceding claims, wherein said polymeric material has a flexural modulus, measured according to Standard ASTM D790-03, at 23°C, not lower than or equal to about 0.5 GPa.

25. Tire according to any one of the preceding claims, wherein said polymeric material has an ultimate tensile strength, measured according to Standard ASTM D638-03, at 23°C, not lower than or equal to about 40 MPa.

26. Tire according to any one of the preceding claims, wherein said polymeric material is selected from thermoplastic resins, thermosetting resins, or mixtures thereof.

27. Tire according to any one of the preceding claims, wherein said elongated fibers have an ultimate tensile strength, measured according to Standard ASTM D885-03, not lower than or equal to about 1500 MPa.

28. Tire according to any one of the preceding claims, wherein said elongated fibers have a tensile modulus, measured according to Standard ASTM D885-03, not lower than or equal to about 50 GPa.

29. Tire according to any one of the preceding claims, wherein said elongated fibers are selected from: glass fibers, aromatic polyamide fibers, polyvinyl alcohol fibers, carbon fibers, or mixtures thereof.

30. Tire according to any one of the preceding claims, wherein said elongated fibers are present in the composite material in an amount of from about 30% by weight to about 95% by weight with respect to the total weight of the composite material.

## Patentansprüche

1. Reifen mit:
- einem Paar Wulststrukturen (103), wobei die Wulststruktur (103) wenigstens einen Wulstkern (102) aufweist,
- einer Karkassenstruktur, die eine im Wesentlichen ringförmige Gestalt aufweist, mit wenigstens einer Karkassenlage (101), die sich zwischen den Wulststrukturen (103) erstreckt und Endabschnitte, die den Wulstkernen (102) zugeordnet sind, aufweist,
- wenigstens einer Verstärkungsschicht (110), die in Bezug auf den wenigstens einen Endabschnitt der wenigstens einen Karkassenlage (101) seitlich angebracht ist,
- einer Gürtelstruktur (106), die an einer radial äußeren Position in Bezug auf die Karkassenstruktur angebracht ist,
- einem Laufflächenband (109), das an einer radial äußeren Position in Bezug auf die Gürtelstruktur (106) angebracht ist,
- einem Paar Seitenwände (108), die seitlich an gegenüberliegenden Seiten in Bezug auf die Karkassenstruktur angebracht sind,
bei dem die wenigstens eine Verstärkungsschicht (110) wenigstens einen ersten Verstärkungskord (1) mit einem Kern (2) mit wenigstens einem ersten länglichen Element, das wenigstens einen Verbundwerkstoff aufweist, aufweist, **dadurch gekennzeichnet, dass** der Verbundwerkstoff mehrere längliche Fasern, die in ein Polymermaterial eingebettet sind, aufweist, bei dem der Kern (2) mit wenigstens einem zweiten länglichen Element (3) mit wenigstens einem elementaren Metalldraht umwickelt ist.

2. Reifen nach Anspruch 1, bei dem die wenigstens eine Verstärkungsschicht (110) an einer axial äußeren Position mit Bezug auf den axial äußeren Abschnitt (101a) des wenigstens einen Endabschnitts der wenigstens einen Karkassenlage (101) platziert ist.

3. Reifen nach Anspruch 1, bei dem die wenigstens eine Verstärkungsschicht (110) an einer axial inneren Position mit Bezug auf den axial inneren Abschnitt (101b) des wenigstens einen Endabschnitts der wenigstens einen Karkassenlage (101) platziert ist.

4. Reifen nach Anspruch 1, bei dem die wenigstens eine Verstärkungsschicht (110) an einer in Bezug auf den axial äußeren Abschnitt (101a) des wenigstens einen Endabschnitts der wenigstens einen Karkassenlage (101) axial inneren Position platziert ist.

5. Reifen nach Anspruch 1, bei dem der Reifen zwei Karkassenlagen (101, 101') aufweist, die Endabschnitte aufweisen, die den Wulstkernen (102) zugeordnet sind, wobei die wenigstens eine Verstärkungsschicht (110) zwischen den Endabschnitten der Karkassenlagen (101, 101') platziert ist.

6. Reifen nach einem der vorherigen Ansprüche, bei dem die wenigstens eine Verstärkungsschicht (110) in Übereinstimmung mit dem radial äußeren Abschnitt des wenigstens einen Wulstkerns (102) beginnt, sich entlang des axial inneren Abschnitts (101b) oder des axial äußeren Abschnitts (101a) des wenigstens einen Endabschnitts der wenigstens einen Karkassenlage (101) erstreckt und sich radial nach außen mit Bezug auf den wenigstens einen Wulstkern (102) erstreckt.

7. Reifen nach einem der vorherigen Ansprüche, bei dem sich die wenigstens eine Verstärkungsschicht (110) entlang der Reifenseitenwand (108) bis zu dem Ende der Reifengürtelstruktur (106) erstreckt.

8. Reifen nach einem der vorherigen Ansprüche, bei dem der wenigstens eine erste Verstärkungskord (1) einen Kern (2) aufweist, der wenigstens zwei erste längliche Elemente aufweist, die parallel zueinander angeordnet sind.

9. Reifen nach Anspruch 8, bei dem der wenigstens eine Verstärkungskord (1) einen Kern (2) mit wenigstens drei länglichen Elementen aufweist, die parallel zueinander angeordnet sind.

10. Reifen nach einem der vorherigen Ansprüche, bei dem der Kern (2) mit nur einem zweiten länglichen Element (3) umwickelt ist, wobei das zweite längliche Element (3) wenigstens einen elementaren Metalldraht aufweist.

11. Reifen nach einem der vorherigen Ansprüche, bei dem der Kern (2) mit wenigstens zwei oder mehr zweiten länglichen Elementen (3) umwickelt ist, wobei jedes der zweiten länglichen Elemente (3) wenigstens einen elementaren Metalldraht aufweist.

12. Reifen nach Anspruch 11, bei dem die zweiten länglichen Elemente (3) parallel in der gleichen Richtung um den Kern (2) gewunden sind.

13. Reifen nach einem der vorherigen Ansprüche, bei dem das wenigstens eine zweite längliche Element (3) aus einem einzelnen elementaren Metalldraht besteht.

14. Reifen nach einem der vorherigen Ansprüche, bei dem das erste längliche Element einen Durchmesser von ungefähr 0,1 mm bis ungefähr 1,0 mm aufweist.

15. Reifen nach einem der vorherigen Ansprüche, bei dem das zweite längliche Element einen Durchmesser von ungefähr 0,08 mm bis ungefähr 1,0 mm aufweist.

16. Reifen nach einem der vorherigen Ansprüche, bei dem der Verstärkungskord (1) einen Durchmesser von ungefähr 0,3 mm bis ungefähr 2,0 mm aufweist.

17. Reifen nach einem der vorherigen Ansprüche, bei dem das zweite längliche Element (3) um den Kern (2) mit einer Schlaglänge von ungefähr 2,5 mm bis ungefähr 30 mm gewunden ist.

18. Reifen nach einem der vorherigen Ansprüche, bei dem der Verstärkungskord (1) eine Bruchdehnung, gemessen an dem blanken Kord, von größer oder gleich ungefähr 0,8% aufweist.

19. Reifen nach einem der vorherigen Ansprüche, bei dem der Verstärkungskord (1) eine Steifigkeit, gemessen an dem blanken Kord, von größer oder gleich ungefähr 8 tsu aufweist.

20. Reifen nach einem der vorherigen Ansprüche, bei dem der Verbundwerkstoff einen Biegemodul, gemessen bei 23°C nach der Norm ASTM D790-03, von größer oder gleich ungefähr 10 GPa aufweist.

21. Reifen nach einem der vorherigen Ansprüche, bei dem der Verbundwerkstoff eine Zugfestigkeit, gemessen bei 23°C nach der Norm ASTM D3916-02, von größer oder gleich ungefähr 600 MPa aufweist.

22. Reifen nach einem der vorherigen Ansprüche, bei dem der Verbundwerkstoff einen Zugmodul, gemessen bei 23°C nach der Norm ASTM D3916-02, von größer oder gleich ungefähr 20 GPa aufweist.

23. Reifen nach einem der vorherigen Ansprüche, bei dem der Verbundwerkstoff eine spezifische Dichte, gemessen nach der Norm ASTM D792-00, von kleiner oder gleich ungefähr 3,0 g/cm³ aufweist.

24. Reifen nach einem der vorherigen Ansprüche, bei dem das Polymermaterial einen Biegemodul, gemessen bei 23°C nach der Norm ASTM D790-03, von größer oder gleich ungefähr 0,5 GPa aufweist.

25. Reifen nach einem der vorherigen Ansprüche, bei dem das Polymermaterial eine Zugfestigkeit, gemessen bei 23°C nach der Norm ASTM D638-03, von größer oder gleich ungefähr 40 MPa aufweist.

26. Reifen nach einem der vorherigen Ansprüche, bei dem das Polymermaterial aus thermoplastischen Harzen, wärmehärtenden Harzen oder Mischungen davon ausgewählt ist.

27. Reifen nach einem der vorherigen Ansprüche, bei dem die länglichen Fasern eine Zugfestigkeit, gemessen nach der Norm ASTM D885-03, von größer oder gleich ungefähr 1500 MPa aufweisen.

28. Reifen nach einem der vorherigen Ansprüche, bei dem die länglichen Fasern einen Zugmodul, gemessen nach der Norm ASTM D885-03, von größer oder gleich ungefähr 50 GPa aufweisen.

29. Reifen nach einem der vorherigen Ansprüche, bei dem die länglichen Fasern aus Glasfasern, aromatischen Polyamidfasern, Polyvinylalkoholfasern, Kohlefasern oder Mischungen davon ausgewählt sind.

30. Reifen nach einem der vorherigen Ansprüche, bei dem die länglichen Fasern in dem Verbundwerkstoff in einer Menge von ungefähr 30 Gewichtsprozent bis zu ungefähr 95 Gewichtsprozent im Bezug auf das Gesamtgewicht des Verbundwerkstoffs enthalten sind.

## Revendications

1. Pneu comprenant:
- une paire de structures de talon (103), ladite structure de talon (103) comprenant au moins une âme de talon (102) ;
- une structure de carcasse ayant une forme sensiblement toroïdale, comprenant au moins une nappe de carcasse (101) s'étendant entre lesdites structures de talon (103) et ayant des parties d'extrémité associées avec lesdites âmes (102);
- au moins une couche de renfort (110) appliquée latéralement par rapport à au moins une partie d'extrémité de ladite au moins une nappe de carcasse (101) ;
- une structure de ceinture (106) appliquée dans une position radialement externe par rapport à ladite structure de carcasse ;
- une bande de roulement (109) appliquée dans une position radialement externe par rapport à ladite structure de ceinture (106) ;
- une paire de parois latérales (108) appliquées latéralement sur des côtés opposés par rapport à ladite structure de carcasse ;
dans lequel ladite au moins une couche de renfort (110) comprend au moins un premier cordon de renfort (1) comprenant un noyau (2) comportant au moins un premier élément allongé comprenant au moins un matériau composite, **caractérisé en ce que** ledit matériau composite comprenant plusieurs fibres allongées noyées dans un matériau polymère, ledit noyau (2) étant enveloppé avec au moins un deuxième élément allongé (3) comprenant au moins un fil métallique élémentaire.

2. Pneu selon la revendication 1, dans lequel ladite au moins une couche de renfort (110) est placée dans une position axialement extérieure par rapport à la partie axialement extérieure (101a) de ladite au moins une portion d'extrémité de ladite au moins une nappe de carcasse (101).

3. Pneu selon la revendication 1, dans lequel ladite au moins une couche de renfort (110) est placée dans une position axialement intérieure par rapport à la partie axialement intérieure (101b) de ladite au moins une partie d'extrémité de ladite au moins une nappe de carcasse (101)

4. Pneu selon la revendication 1, dans lequel ladite au moins une couche de renfort (110) est placée dans une position axialement intérieure par rapport à la partie axialement extérieure (101a) de ladite au moins une extrémité de ladite au moins une nappe de carcasse (101).

5. Pneu selon la revendication 1, dans lequel ledit pneu comprend deux nappes de carcasse (101, 101') présentant des portions d'extrémité associées auxdites âmes (102) de talon, ladite au moins une couche de renfort (110) étant placée entre les portions d'extrémité desdites nappes de carcasse (101, 101').

6. Pneu selon l'une quelconque des revendications précédentes, dans lequel ladite au moins une couche de renfort (110) commence au niveau de la partie radialement externe de ladite au moins une âme de talon (102), s'étend le long de la partie axialement intérieure (101b) ou de la partie axialement extérieure (101a) de ladite au moins une partie d'extrémité de ladite au moins une nappe de carcasse (101) et s'étend radialement vers l'extérieur par rapport à ladite au moins une âme de talon (102).

7. Pneu selon l'une quelconque des revendications précédentes, dans lequel ladite au moins une couche de renfort (110) s'étend le long de la paroi latérale du pneu (108) jusqu'à l'extrémité de la structure de ceinture (106) du pneu.

8. Pneu selon l'une quelconque des revendications précédentes, dans lequel ledit au moins un premier cordon de renfort (1) comprend un noyau (2) comprenant au moins deux premiers éléments allongés disposés en parallèle l'un à l'autre.

9. Pneu selon la revendication 8, dans lequel ledit au moins un cordon de renfort (1) comprend un noyau (2) comportant au moins trois éléments allongés disposés en parallèle l'un à l'autre.

10. Pneu selon l'une quelconque des revendications précédentes, dans lequel ledit noyau (2) est enveloppé avec seulement un deuxième élément allongé (3), ledit deuxième élément allongé (3) comprenant au moins un fil métallique élémentaire.

11. Pneu selon l'une quelconque des revendications précédentes, dans lequel ledit noyau (2) est enveloppé avec au moins deux ou plus deuxièmes éléments allongés (3), chacun desdits deuxièmes éléments allongés (3) comprenant au moins un fil de métal élémentaire.

12. Pneu selon la revendication 11, dans lequel lesdits deuxièmes éléments allongés (3) sont enroulés en parallèle, dans le même sens, autour dudit noyau (2).

13. Pneu selon l'une quelconque des revendications précédentes, dans lequel ledit au moins un deuxième élément allongé (3) est composé d'un unique fil métallique élémentaire.

14. Pneu selon l'une quelconque des revendications précédentes, dans lequel ledit premier élément allongé a un diamètre de 0,1 mm à environ 1,0 mm.

15. Pneu selon l'une quelconque des revendications précédentes, dans lequel ledit deuxième élément allongé a un diamètre d'environ 0,08 mm à environ 1,0 mm.

16. Pneu selon l'une quelconque des revendications précédentes, dans lequel ledit cordon de renfort (1) a un diamètre d'environ 0,3 mm à environ 2,0 mm.

17. Pneu selon l'une quelconque des revendications précédentes, dans lequel ledit deuxième élément allongé (3) est enroulé autour dudit noyau (2) selon un pas de câblage d'environ 2,5 mm à environ 30 mm.

18. Pneu selon l'une quelconque des revendications précédentes, dans lequel ledit cordon de renfort (1) présente un allongement à la rupture, mesuré sur le cordon nu, supérieur ou égal à environ 0,8%.

19. Pneu selon l'une quelconque des revendications précédentes, dans lequel ledit cordon de renfort (1) a une raideur, mesurée sur le cordon nu, supérieure ou égale à environ 8 tsu.

20. Pneu selon l'une quelconque des revendications précédentes, dans lequel ledit matériau composite a un module de flexion, mesuré selon la norme ASTM D790-03, à 23°C, qui n'est pas inférieur à ou est égal à environ 10 GPa.

21. Pneu selon l'une quelconque des revendications précédentes, dans lequel ledit matériau composite a une contrainte de traction à la rupture, mesurée selon la norme ASTM D3916-02, à 23°C, qui n'est pas inférieure à ou est égale à environ 600 MPa.

22. Pneu selon l'une quelconque des revendications précédentes, dans lequel ledit matériau composite a un module de traction, mesuré selon la norme ASTM D3916-02, à 23°C, qui n'est pas inférieur à ou est égal à environ 20 GPa.

23. Pneu selon l'une quelconque des revendications précédentes, dans lequel ledit matériau composite a une densité relative, mesurée selon la norme ASTM D792-00, inférieure ou égale à environ 3,0 g/cm³.

24. Pneu selon l'une quelconque des revendications précédentes, dans lequel ledit matériau polymère a un module de flexion, mesuré selon la norme ASTM D790-03, à 23°C, qui n'est pas inférieur à ou est égal à environ 0,5 GPa.

25. Pneu selon l'une quelconque des revendications précédentes, dans lequel ledit matériau polymère a une contrainte de traction à la rupture, mesurée selon la norme ASTM D638-03, à 23°C, qui n'est pas inférieure à ou est égale à environ 40 MPa.

26. Pneu selon l'une quelconque des revendications précédentes, dans lequel ledit matériau polymère est choisi parmi les résines thermoplastiques, les résines thermodurcissables, ou leurs mélanges.

27. Pneu selon l'une quelconque des revendications précédentes, dans lequel lesdites fibres allongées ont une contrainte de traction à la rupture, mesurée selon la norme ASTM D885-03, qui n'est pas inférieure à ou est égale à environ 1500 MPa.

28. Pneu selon l'une quelconque des revendications précédentes, dans lequel lesdites fibres allongées ont un module de traction, mesuré selon la norme ASTM D885-03, qui n'est pas inférieur à ou est égal à environ 50 GPa.

29. Pneu selon l'une quelconque des revendications précédentes, dans lequel lesdites fibres allongées sont choisies parmi : fibres de verre, fibres de polyamide aromatique, fibres d'alcool polyvinylique, fibres de carbone, ou leurs mélanges.

30. Pneu selon l'une quelconque des revendications précédentes, dans lequel lesdites fibres allongées sont présentes dans le matériau composite à hauteur d'environ 30% en masse à environ 95% en masse par rapport à la masse totale du matériau composite.
